# EUROPÄISCHE PATENTSCHRIFT

(11) **EP 1 218 085 B1**
(45) Veröffentlichungstag und Bekanntmachung des Hinweises auf die Patenterteilung: **30.07.2003**
(21) Anmeldenummer: 00960623.7
(22) Anmeldetag: 08.09.2000
(51) Int. Cl.: B01D 29/44, B01D 29/64, B01D 29/90, B01D 29/94, B01D 29/96, B01D 35/16, B01D 36/04, B01D 29/11

(54) **VORRICHTUNG ZUM FILTRIEREN VON VERUNREINIGTEN FLÜSSIGKEITEN**
DEVICE FOR FILTERING CONTAMINATED LIQUIDS
DISPOSITIF POUR LE FILTRAGE DE LIQUIDES POLLUES

(30) Priorität: 04.10.1999 DE 19947724
(43) Veröffentlichungstag der Anmeldung: 03.07.2002
(73) Patentinhaber: MSG Maschinen- und Stahlbau GmbH, 16247 Joachimsthal (DE)
(72) Erfinder: WENSAUER, Dietmar, 51143 Köln (DE)
(74) Vertreter: Buschhoff, Josef, Dipl.-Ing.
(86) Internationale Anmeldenummer: EP0008765
(87) Internationale Veröffentlichungsnummer: WO01024905

(56) Entgegenhaltungen:
- US-A- 4 673 502
- US-A- 4 985 146
- US-A- 5 554 284
- US-A- 5 595 655

## Beschreibung

Die Erfindung betrifft eine Vorrichtung zum Filtrieren von verunreinigten Flüssigkeiten, insbesondere von Kühl- und/oder Schmierflüssigkeiten in der spanabhebenden Werkstückbearbeitung, mit einem Flüssigkeitsbehälter mit einem Zulauf für die verunreinigte und einem Ablauf für die filtrierte Flüssigkeit, in dem ein mit dem Ablauf verbindbarer Filtriereinsatz angeordnet ist.

Derartige gelegentlich auch als Siebabscheider bezeichnete Vorrichtungen dienen in der spanabhebenden Werkstückbearbeitung zur Aufbereitung der beim Schleifen, Drehen, Fräsen usw. eingesetzten Kühl- und Schmierflüssigkeiten, die von Materialspänen bzw. -staub weitestgehend befreit werden müssen, bevor sie als Kühlschmiermittel erneut eingesetzt werden können. Die verunreinigte Flüssigkeit gelangt über den Zulauf in den Flüssigkeitsbehälter und wird als gereinigte Flüssigkeit über den Ablauf abgezogen, nachdem sie durch den Filtriereinsatz hindurchgeflossen ist, der Späne und Staub aus der Flüssigkeit zurückhält. Die abgetrennten Verunreinigungen können mittels einer Austragvorrichtung automatisch entfernt werden, bei geringem Schmutzaufkommen ist es auch denkbar, die Flüssigkeit aus der Filtriervorrichtung gelegentlich abzulassen und den Schlamm, der sich im Laufe der Zeit angesammelt hat, von Hand zu entfernen.

Aus der DE 196 35 364 A1 ist eine Vorrichtung der eingangs genannten Art bekannt, bei der als Filtriereinsatz in dem Flüssigkeitsbehälter ein Spaltsieb angeordnet ist, dessen Eintrittsseite nach unten hin gerichtet ist, wobei die Kratzerkette eines Kratzerförderers zur Reinigung des Spaltsiebes an dessen Eintrittsseite vorbeigeführt ist. Bei dieser bekannten Vorrichtung ist die Fläche des Spaltsiebes, durch die die Flüssigkeit beim Filtrieren hindurchtreten kann, begrenzt und durch die Länge und Breite des Flüssigkeitsbehälters beschränkt. Da der Platz, den Filtriervorrichtungen in der Nähe von Werkzeugmaschinen einnehmen, möglichst gering bemessen sein soll und daher eine kompakte Bauweise der Filtriervorrichtungen gefordert wird, eignet sich die bekannte Vorrichtung in den meisten Fällen nicht zur Vollstromfiltration, bei der die gesamte, durchgesetzte Flüssigkeit mit gleichbleibender Feinheit gefiltert wird, sondern wird regelmäßig nur zur Teilstromfiltration eingesetzt, bei der nur ein Teil der Flüssigkeit über das Spaltfilter mit einer Spaltweite von 50 µm oder 75 µm feingefiltert wird, während man sich bei dem Rest der zu reinigenden Flüssigkeit mit einem etwas schlechteren Reinigungsergebnis zufriedengibt, das über ein weiteres, gröberes Filter erzielt werden kann oder mit Hilfe eines Lamellenpaketes erreicht wird, das für eine Strömungsberuhigung sorgt, infolge derer sich die in der Schwebe mitgeführten Verunreinigungen in der Schmutzflüssigkeit absetzen können.

Für den Durchsatz größerer Flüssigkeitsmengen, die in einer Vollstromfiltrierung vollständig gleichmäßig feingefiltert werden sollen, sind Vorrichtungen bekannt, bei denen ein um eine horizontale Achse rotierender Filtriereinsatz im Flüssigkeitsbehälter eintauchend angeordnet ist. Die verunreinigte Flüssigkeit strömt durch ein am Umfang des Filtriereinsatzes angeordnetes Filtermittel in das Trommelinnere hinein und wird über eine an den Einsatz angeschlossene Saugleitung abgeführt. Parallel zur Drehachse der Trommel ist im Behälter mindestens ein Kratzer angeordnet, der gegen den Einsatz gedrückt wird und bei dessen Rotation die sich am Filtermittel ansammelnden Verunreinigungen entfernt, die dann im Flüssigkeitsbehälter nach unten absinken und von einer Räumvorrichtung aus dem Behälter entfernt werden.

Bei dieser bekannten Vorrichtung für die Vollstrom-Feinfiltration bereitet die Abfuhr des Filtrats aus dem Inneren des Filtriereinsatzes häufig Probleme, da das Saugrohr mit einer Drehdurchführung in das Filterinnere geführt ist, deren Abdichtung gegenüber der verunreinigten Flüssigkeit schwierig ist. Es kann bei dieser bekannten Vorrichtung nur mit einer vergleichsweise geringen Druckdifferenz zwischen dem Filterinneren und der außen an diesem anstehenden Schmutzflüssigkeit gearbeitet werden, so daß das Filtrat unmittelbar hinter dem Filtriereinsatz in einem Filtrattank zwischengespeichert werden muß, aus dem es mittels Förderpumpen zu der Werkzeugmaschine od.dgl. zurückgefördert werden kann. Besonders schwierig erweist sich bei der bekannten Vorrichtung der Aus- und Einbau des Filtriereinsatzes, der in regelmäßigen Abständen erforderlich ist, um den Filter einer Grundreinigung zu unterziehen, wenn nicht von dem Kratzer entfernte Verunreinigungen das Filtermittel an dem Einsatz im Laufe der Zeit zugesetzt haben. US-A-4985146 beschreibt eine Vorrichtung mit einer Filtertrommel und einer Reinigungsvorrichtung, die entlang der Umgangsfläche der Trommel beweglich ist, um das Filtermittel zu reinigen.

Aufgabe der Erfindung ist es, eine Vorrichtung der eingangs genannten Art so zu verbessern, daß bei vergleichsweise kleinen Außenabmessungen der Vorrichtung ein hoher Flüssigkeitsdurchsatz durch den Filtriereinsatz erreicht wird, wobei es möglich sein soll, das Filtrat ohne zusätzlichen Filtratsammelbehälter unmittelbar aus dem Flüssigkeitsbehälter abzuziehen und wobei darüber hinaus eine zuverlässige Reinigung des Filtriereinsatzes im Betrieb und eine leichte Austauschbarkeit des Filtriereinsatzes gewährleistet sein soll.

Diese Aufgabe wird durch die Merkmale des Anspruchs 1 gelöst. Weitere Ausführungsformen der Erfindung sind in den Unteransprüchen definiert.

Durch die Verwendung einer Filtertrommel, an deren Umfang das Filtermittel angeordnet ist, erhält man eine große Filterfläche, die auch für große Flüssigkeitsdurchsätze ausreichend ist. Da die Filtertrommel sich selbst in dem Flüssigkeitsbehälter nicht dreht, sondern gegenüber diesem feststehend angeordnet ist, kann auf die aufwendige, beim Stand der Technik verwendete Drehdurchführung zwischen dem Filtertrommelinneren und dem Abzugrohr für das Filtrat verzichtet werden. Vielmehr ist es möglich, das Rohr für das Filtrat fest an der Filtertrommel anzuflanschen oder auf andere Weise dicht zu befestigen und das Filtrat direkt aus dem Filtertrommelinneren mit Hilfe einer Förderpumpe abzusaugen. Hierdurch ist auch ein vergleichsweise großes Druckgefälle zwischen Filteraußen- und -innenseite realisierbar, was einen hohen Durchsatz durch die zur Verfügung stehende Filterfläche zur Folge hat.

Da die Filtertrommel nach oben aus dem Behälter entfernbar bzw. von oben in diesen einsetzbar ist, braucht bei einem Austausch der Filtertrommel die Flüssigkeit aus dem Flüssigkeitsbehälter nicht abgelassen werden, so daß die Stillstandszeit der Vorrichtung bei einem Trommelwechsel auf ein Minimum beschränkt werden kann. Der Austausch der Trommel kann innerhalb weniger Minuten geschehen, indem diese nach Abflanschen von der Förderpumpe gemeinsam mit einem Teil der Saugleitung oben aus dem Behälter herausgezogen und durch eine neue Trommel ersetzt wird, die dann vor ihrer Inbetriebnahme nur noch an die Förderpumpe angeflanscht werden muß.

Der Filtratablauf erfolgt zweckmäßig, wie bereits angedeutet, über ein Filtratsaugrohr, das unter Abdichtung durch eine Stirnfläche der Filtertrommel in das Trommelinnere hineinragt. Dabei kann die Anordnung so getroffen sein, daß die Filtertrommel am Filtratablauf hängend angeordnet ist, also für ihre ortsfeste Montage im Inneren des Flüssigkeitsbehälters keine zusätzlichen Befestigungsmittel eingesetzt werden, sondern der Filtratablauf die Filtertrommel trägt und in ihrer Position innerhalb des Flüssigkeitsbehälters festlegt.

Die Filtertrommel kann an ihrer unteren Stirnseite eine Ablaßöffnung aufweisen, die von der oberen Stirnseite her zu öffnen bzw. zu verschließen ist. Bei einem Ausbau der Filtertrommel, wie er bei deren Austausch oder für eine Grundreinigung erforderlich ist, kann die Ablaßöffnung an der unteren Stirnseite von der Oberseite der Trommel her geöffnet werden, so daß das sich noch im Inneren der Trommel befindende Filtrat nach unten aus dieser ablaufen kann, wenn die Trommel nach oben aus dem Flüssigkeitsbehälter herausgehoben wird. Für die nach Entfernen der Trommel anschließende Grundreinigung derselben weist sie vorzugsweise an ihrer oberen und/oder unteren Stirnseite eine verschließbare Reinigungsöffnung auf, nach deren Öffnen das Trommelinnere zugänglich ist, um den Trommelinnenraum beispielsweise mit einem Hochdruckreiniger zu säubern.

Das Filtermittel am Umfang der Filtertrommel ist zweckmäßig ein Spaltsieb, das praktisch keinem Verschleiß unterliegt und das besonders leicht gereinigt werden kann. Zur Reinigung des Filtermittels im Betrieb des Filters weist die Reinigungseinrichtung vorzugsweise wenigstens ein sich über die Höhe der Filtertrommel erstreckendes, um den Filtertrommelumfang am Filtermittel entlangbewegbares Reinigungselement auf. Die gesamte Reinigungseinrichtung ist an der Oberseite des Behälters in diesen eintauchend gelagert, wobei sie zweckmäßig mittels eines Drehlagers drehbar an der Behälteroberseite angeordnet ist. Die Reinigungseinrichtung kann dann mit Hilfe eines geeigneten Antriebsmotors um die feststehend angeordnete Filtertrommel bewegt werden, wobei das bzw. die Reinigungselement(e) an der Umfangsfläche der Trommel entlangbewegt werden und dabei die dort abgelagerten Verunreinigungen entfernen. Zweckmäßig besteht hierzu ein jedes Reinigungselement im wesentlichen aus einer am Filtermittel entlangbewegbaren Kratzer- und/oder Bürstenleiste.

Besonders vorteilhaft ist es, wenn das Reinigungselement austauschbar an der Reinigungseinrichtung angeordnet ist. Es kann dann bei Verschleiß leicht gegen ein neues Reinigungselement ausgewechselt werden bzw. es ist möglich, für verschiedene Verunreinigungen in der Flüssigkeit wie beispielsweise Schleifstaub, Dreh-, Fräs- oder Hobelspäne usw. Reinigungselemente einzusetzen, die einen bestmöglichen Reinigungseffekt bei der jeweils anfallenden Art der Verschmutzung gewährleistet. Das Reinigungselement ist vorzugsweise von der Oberseite des Behälters her von der Reinigungseinrichtung entfernbar bzw. montierbar, kann also ausgetauscht werden, ohne daß es erforderlich ist, Flüssigkeit aus dem Flüssigkeitsbehälter abzulassen, um Zugang zu dem Reinigungselement zu schaffen.

Vorzugsweise weist die Reinigungseinrichtung mehrere Reinigungselemente auf, die an einem gemeinsamen, die Filtertrommel umgebenden Haltering vorzugsweise in gleichmäßigem Abstand voneinander angeordnet sind. Durch die gleichmäßige Anordnung von mehreren Reinigungselementen, die alle gleichzeitig das Filtermittel an der Filtertrommel abreinigen, heben sich die von den Reinigungselementen auf die Trommel ausgeübten Andruckkräfte gegenseitig auf, so daß die Trommel auch bei Aufhängung lediglich über das an sie angeflanschte Abflußrohr sicher im Behälter befestigt ist und nicht unter einer radial auf sie einwirkenden Last steht.

Eine besonders vorteilhafte Ausgestaltung der Erfindung ergibt sich, wenn die Filtertrommel bzw. deren Aufhängung und die Reinigungseinrichtung an einer gemeinsamen Abdeckung des Flüssigkeitsbehälters angeordnet sind. Diese Anordnung ermöglicht es, auch vorhandene Flüssigkeitsbehälter mit der erfindungsgemäßen Filtertrommel und zugehöriger Reinigungseinrichtung auszurüsten, indem diese einfach von oben in einen von seinen bisherigen Filtereinbauten befreiten Flüssigkeitsbehälter eingehängt werden, wobei sich die gemeinsame Abdeckung am oberen Rand des Behälters abstützen kann. Die Filtertrommel taucht bevorzugt mit ihrem umfangsseitig angeordneten Filtermittel vollständig in die zu filtrierende Flüssigkeit im Flüssigkeitsbehälter ein, so daß sicher vermieden wird, daß die an der Saugleitung angeschlossene Förderpumpe das im Inneren der Filtertrommel vorhandene Filtrat vollständig absaugt. Um ein vollständiges Eintauchen der Filtertrommel in die Flüssigkeit während des Betriebs der Filtriervorrichtung dauerhaft zu gewährleisten, ist im Flüssigkeitsbehälter zweckmäßig in an sich bekannter Weise ein Niveauschalter angeordnet, der dafür sorgt, daß die Förderpumpe für das Filtrat abgeschaltet wird, wenn der Flüssigkeitsstand unter ein vorher festgelegtes Niveau absinkt.

Vorzugsweise ist das Reinigungselement in einer Halteprofilleiste axial verschieblich aufgenommen und zweckmäßig relativ zur Filtertrommel höhenbeweglich angeordnet. Die axiale Verschieblichkeit des Reinigungselements in der Halteprofilleiste gestattet einen besonders einfachen Austausch bei Verschleiß od.dgl.. Die Höhenbeweglichkeit relativ zur Filtertroromel vermag das Reinigungsergebnis beim Überstreichen des Filtermittels weiter zu verbessern, da hierdurch die Abreinigung nicht nur in Umfangsrichtung der Filtertrommel, sondern auch in ihrer Axialrichtung erfolgt, wodurch es gelingt, Verunreinigungen wie beispielsweise Späne, die sich in den Spalten des als Spaltsieb ausgestalteten Filtermittels festgesetzt haben, entweder vollständig aus den Spalten wieder herauszuziehen oder zumindest abzuscheren und dadurch wieder eine glatte Oberfläche am Filtermittel zu schaffen, an der sich weitere Verunreinigungen nicht leicht anlegen.

Bei manchen Einsatzzwecken kann die erfindungsgemäße Vorrichtung zweckmäßig eine Spüleinrichtung für die Filtertrommel aufweisen, die beispielsweise im wesentlichen aus einer Filtrat in das Innere der Filtertrommel fördernden Rückspülpumpe besteht. Es ist auch möglich, daß wenigstens eines der Reinigungselemente mit einer mittels Druckflüssigkeit beaufschlagbaren Druckreinigereinheit versehen ist, die das Filtermittel am Umfang der Filtertrommel nicht (nur) mechanisch mittels eines Kratzers oder einer Bürste reinigt, sondern die für eine hydraulische Reinigung sorgt, indem Druckflüssigkeit in Richtung auf das Filtermittel geleitet wird. Eine solche Reinigung kann sich insbesondere dann empfehlen, wenn die zu reinigende Flüssigkeit aus dem Behälter abgelassen wurde, beispielsweise, wenn eine Inspektion des Behälterinneren erfolgen soll oder Filterschlamm nach längerer Betriebsdauer der Filtriervorrichtung zu entfernen ist.

Der Flüssigkeitsbehälter kann in an sich bekannter Weise mit einer wenigstens teilweise unterhalb der Filtertrommel angeordneten Austragvorrichtung versehen sein, mit deren Hilfe der sich unterhalb der Filtertrommel absetzende Filterschlamm aus dem Behälter automatisch entfernt werden kann. Die Austragvorrichtung besteht zweckmäßig im wesentlichen aus einem Kratzerförderer mit am Behälterboden entlangbewegbaren Förderkratzern, die den Filterschlamm, die Späne u.dgl. bei ihrer Bewegung über den Behälterboden mitnehmen und zweckmäßig über eine Rampe zu einem Auswurf befördern, wo er einem Schmutzkasten übergeben wird. Eine besonders zweckmäßige Ausgestaltung ergibt sich hierbei, wenn die Filtertrommel an ihrer unteren Stirnseite mit einem zusätzlichen Filtermittel versehen ist, wobei das Obertrum des Kratzerförderers mit den Förderkratzern an dem zusätzlichen Filtermittel vorbeigeführt ist und dieses hierdurch abreinigt. Bei dieser Ausgestaltung wird also nicht nur die Umfangsfläche der Filtertrommel, sondern zusätzlich auch noch deren untere Stirnseite als Filterfläche genutzt, wodurch ein noch größerer Flüssigkeitsdurchsatz erreichbar ist. Auch bei dieser Ausführungsform ist die Filtertrommel relativ zum Flüssigkeitsbehälter unbeweglich in diesem angeordnet und kann ohne vorheriges Ablassen der zu filtrierenden Flüssigkeit aus dem Behälter nach oben aus diesem entnommen bzw. in diesen eingesetzt werden.

Weitere Merkmale und Vorteile der Erfindung ergeben sich aus der nachfolgenden Beschreibung und den Zeichnungen, worin eine bevorzugte Ausführungsform der Erfindung an einem Beispiel näher erläutert ist. Es zeigt:
- Fig. 1: eine Vorrichtung zum Filtrieren von verunreinigten Flüssigkeiten in schematischer Darstellung in einem Längsschnitt;
- Fig. 2: den Gegenstand der Fig. 1 in einem vergrößerten Ausschnitt im Bereich der Filtertrommel und Reinigungseinrichtung; und
- Fig. 3: eine Einzelheit der Fig. 2 im Schnitt längs der Linie III-III in vergrößerter Darstellung.

Die Zeichnung zeigt eine Vorrichtung 10 zum Filtrieren von Kühl-Schmierflüssigkeit für Werkzeugmaschinen, mit der Späne, Schleifstaub u.dgl. aus der Flüssigkeit entfernt werden, bevor das Kühlschmiermittel der Werkzeugmaschine erneut zugeführt wird.

Die Vorrichtung 10 hat einen Flüssigkeitsbehälter 11, der an seiner Oberseite mit einem Deckel 12 verschlossen ist. An dem Deckel ist ein Zulauf 13 für die von der Werkzeugmaschine kommende, verunreinigte Flüssigkeit 14 angeordnet. Seitlich neben dem Zulauf 13 befindet sich am Deckel 12 ein Ablauf 15 für das saubere Filtrat 16, das mit Hilfe einer lediglich schematisch dargestellten Förderpumpe 17 der nicht dargestellten Werkzeugmaschine wieder zugeführt wird.

Zur Filtrierung der Flüssigkeit 14 ist in dem Flüssigkeitsbehälter 11 ein Filtriereinsatz 18 angeordnet, der im wesentlichen aus einer zylindrischen Filtertrommel 19 besteht, die aufrecht angeordnet ist und vollständig in die Flüssigkeit 14 im Behälter 11 eintaucht. Die Filtertrommel 19 ist mit einem Saugrohr 20 des Ablaufs 15 über einen Flansch 21 starr verbunden, wobei sich der Ablauf bzw. das Saugrohr an einem lediglich schematisch dargestellten Auflager 22 abstützt und die Filtertrommel 19 von der Oberseite 23 des Behälters in diesem hängend hält.

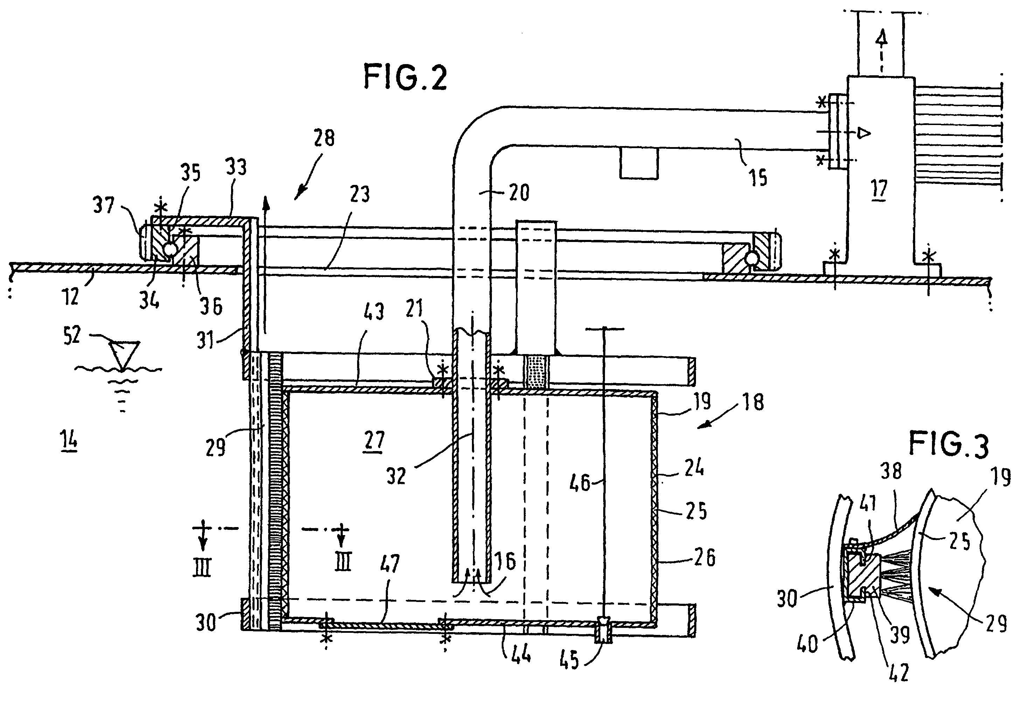

Aufgrund dieser Anordnung ist die Filtertrommel im Betrieb der Filtriervorrichtung gegenüber dem Flüssigkeitsbehälter weitgehend unbeweglich montiert, taucht also als starres Bauteil in den Behälter ein. Am Umfang 24 der zylindrischen Trommel ist diese über ihre gesamte Höhe und den ganzen Umfang mit einem Filtermittel 25 versehen, wie dies am besten in Fig. 2 erkennbar ist. Bei dem Filtermittel 25 handelt es sich um ein in der Filtertechnik an sich bekanntes Spaltsieb 26, das zum Abscheiden der Verunreinigungen aus der Schmutzflüssigkeit 14 an seiner Auβenseite dicht übereinanderliegende Stäbe hat, zwischen denen Spalte mit geringer Spaltweite freigelassen sind. Die zu filtrierende Flüssigkeit 14 strömt durch die Spalten hindurch, wobei Späne und/oder Schleifstaub, deren Abmessungen größer als die Spaltdicke von beispielsweise 50 µm oder 75 µm sind, nicht mit durch die Spalte hindurchtreten können, sondern sich an der Außenseite des Spaltsiebes 26 anlegen. Das in das Innere 27 der Filtertrommel geströmte Filtrat 16 wird über das Saugrohr 20 direkt aus der Trommel angesaugt und von der Förderpumpe 17 zur Werkzeugmaschine gepumpt. Der hierdurch im Inneren 27 der Trommel entstehende Unterdruck unterstützt den Durchfluß der Flüssigkeit 14 durch das Spaltsieb.

Zur Reinigung des Filtermittels 25 weist die Vorrichtung 10 eine Reinigungseinrichtung 28 auf, die im wesentlichen aus drei gleichmäßig über den Umfang der Filtertrommel verteilten Reinigungselementen 29 und einem unteren und oberen Haltering 30 bzw. 31 besteht, an denen die Reinigungselemente 29 parallel zur Achse 32 der Trommel angeordnet sind. Der obere Haltering 31 ist als oben aus dem Gehäusedeckel 12 ragender Tragflansch 33 ausgebildet, der mit dem Außenring 34 eines Wälzlagers 35 fest verbunden ist. Der Innenring 36 des Wälzlagers ist fest mit dem Gehäusedeckel 12 verbunden. Diese Anordnung ermöglicht es, den oberen Tragflansch 33 und damit die gesamte Reinigungseinrichtung 28 relativ zu der feststehend im Flüssigkeitsbehälter gehaltenen Filtertrommel 19 zu drehen, wozu ein nicht dargestellter Antriebsmotor vorgesehen ist, der mit einem Antriebsritzel in eine am Außenring 34 des Wälzlagers 35 angeordnete Verzahnung 37 eingreift.

Wie aus Fig. 2 gut erkennbar ist, liegen die drei Reinigungselemente 29 am Umfang 24 der Filtertrommel an und können dadurch die sich an der Außenseite der Trommel ablagernden Verunreinigungen mechanisch entfernen, wenn die Reinigungseinrichtung 28 von dem Antriebsmotor gedreht wird. Wie aus Fig. 3 gut zu erkennen ist, bestehen die Reinigungselemente 29 aus jeweils einer Kratzerleiste 38 und einer Bürstenleiste 39, die beide gegen die Siebtrommel angestellt sind. Bürstenleiste 39 und Kratzerleiste 38 sind dabei austauschbar an den Halteringen 30, 31 angeordnet, wozu zwischen dem oberen und unteren Haltering für jedes Reinigungselement eine Halteprofilleiste 40 vorgesehen ist, an der die Kratzerleiste 38 mittels Befestigungsschrauben angeschraubt ist und in die die Bürstenleiste 39 von der Oberseite 23 der Vorrichtung her über ihre gesamte Länge eingeschoben ist, wobei Stege 41 an der Halteprofilleiste in entsprechend ausgestaltete Nuten 42 in der Bürstenleiste einfassen und diese in Richtungen quer zur Einschubrichtung festhalten. Die Bürstenleiste besteht dabei im wesentlichen aus einem flexiblen Material, beispielsweise aus Gummi, das sich ohne Einwirken einer äußeren Kraft nicht von selbst entlang der Halteprofilleiste 40 verschiebt.

Man erkennt, daß die feststehende Anordnung der Filtertrommel 19 im Flüssigkeitsbehälter 11 ihren problemlosen, druckfesten Anschluß an das Saugrohr 20 des Ablaufes 15 ermöglicht, das an der oberen Stirnseite 42 der Trommel fest angeflanscht ist. Anders als bei bisher bekannten, für einen großen Flüssigkeitsdurchlaß, insbesondere bei der Vollstromfiltration eingesetzten Filtertrommeln ist erfindungsgemäß keine Drehdurchführung zwischen Trommel und Saugrohr erforderlich, deren Abdichtung regelmäßig Probleme bereitet und die daher nicht nur verschleißanfällig ist, sondern auch ein Filtrieren nur mit vergleichweise geringem Druckgefälle erlaubt, wodurch wiederum die erforderliche Oberfläche des Filtermittels und damit die Größe der Filtertrommel bei einem vorgegebenen Flüssigkeitsdurchsatz größer ist als bei der Erfindung. Durch die besonders vorteilhafte, hängende Anordnung der Trommel, die von der Deckeloberseite 23 in den Flüssigkeitsbehälter eintaucht, ist ein Ausbau der Trommel beispielsweise zu deren Austausch und/oder zur Durchführung einer Grundreinigung ausgesprochen leicht durchzuführen. Anders als bei den bisher bekannten Filtern ist es dabei nicht erforderlich, die Flüssigkeit 14 vor dem Ausbau der Trommel aus dem Behälter 11 abzulassen. Vielmehr kann die gesamte Schmutzflüssigkeit im Behälter verbleiben, da die Trommel 19 nach Abbau des Saugrohres 20 von der Förderpumpe 17 problemlos nach oben aus dem Flüssigkeitsbehälter herausgehoben werden kann. Um hierbei zu vermeiden, daß das noch im Trommelinneren 27 enthaltene Filtrat beim Trommelausbau mit aus dem Behälter 11 entfernt wird, weist die Filtertrommel 19 an ihrer unteren Stirnseite 44 eine verschließbare Ablaßöffnung 45 auf, die über eine von der Oberseite der Trommel zugängliche Betätigungsstange 46 geöffnet werden kann, so daß das Filtrat beim Herausheben der Trommel durch die Ablaßöffnung 45 abfließen kann und somit nur die leere Trommel aus dem Behälter gehoben werden muß. Die derart ausgebaute Trommel kann dann gegen eine andere Trommel ausgetauscht werden und die Filtriervorrichtung dann nach sehr kurzer Stillstandszeit wieder in Betrieb genommen werden. Die ausgebaute Trommel kann einer sorgfältigen Grundreinigung unterzogen werden, wozu sie an ihrer unteren Stirnseite 44 mit einer im Betrieb von einem Deckel verschlossenen Reinigungsöffnung 47 versehen ist, nach deren öffnen auch das Innere 27 der Trommel beispielsweise mit einem Hochdruckreiniger leicht gesäubert werden kann.

Für den Aus- und Einbau der Filtertrommel ist eine Demontage der Reinigungseinrichtung 28 nicht erforderlich, ebensowenig muß für einen Austausch der Bürstenleisten 39 an der Reinigungseinrichtung zuvor die Trommel aus dem Flüssigkeitsbehälter ausgebaut werden, denn die Bürstenleisten können nach oben aus ihren Halteprofilleisten 40 herausgezogen und gegen neue Reinigungselemente ausgetauscht werden, die nicht nur Bürsten sein können, sondern bei denen es sich auch um glatte Abstreifer aus Metall, Kunststoff, Gummi oder Keramik, um gezahnte Abstreifer od.dgl. handeln kann.

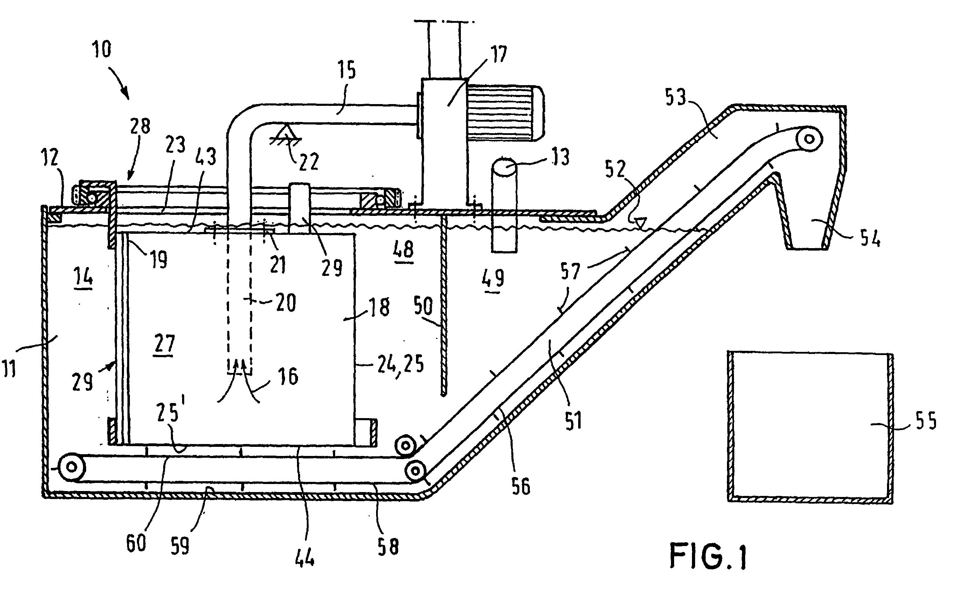

Der Flüssigkeitsbehälter der Vorrichtung 10 kann ein einfacher, zweckmäßig an die Form der Trommel angepaßter Behälter sein, der im wesentlichen nur aus einem Behälterboden und der aufstehenden Behälterwand besteht. Als besonders vorteilhaft hat sich jedoch ein Flüssigkeitsbehälter erwiesen, wie er in Fig. 1 dargestellt ist. Dieser Behälter hat eine im wesentlichen rechteckige Grundform mit einem Filterbereich 48, in dem die Filtertrommel von oben in den Behälter eintaucht. Seitlich an den Filterbereich 48 schließt sich ein Absetzbereich 49 an, der von dem Filterbereich durch eine sich über die gesamte Breite des Behälters erstrekkende, bis kurz über den Boden reichende Lamelle 50 abgetrennt ist. In den Absetzbereich 49 mündet der Zulauf 13 für die Schmutzflüssigkeit 14, wobei sich leicht sedimentierende Verunreinigungen bereits in diesem Bereich nach unten absetzen und gar nicht bis in den Filterbereich gelangen, sondern bereits zuvor mit einer Austragvorrichtung 51 aus dem Flüssigkeitsbehälter ausgetragen werden. Hierzu ist der Behälter in an sich bekannter Weise mit einem über den Flüssigkeitsspiegel 52 aufragenden Auswurfschacht 53 versehen, dessen Auswurföffnung 54 sich oberhalb eines Schmutzbehälters 55 befindet. Die Austragvorrichtung besteht im wesentlichen aus einem Kratzerförderer 56 mit einer Vielzahl von Förderkratzern 57, wobei die am Untertrum 58 befindlichen Förderkratzer über den Behälterboden 59 im Filterbereich, Absetzbereich und am Boden des Auswurfschachtes entlangbewegt werden und dabei die Verunreinigungen mitnehmen und über die Auswurföffnung in den Schmutzbehälter austragen, die sich am Boden des Flüssigkeitsbehälters abgesetzt haben. Man erkennt, daß die am Obertrum befindlichen Kratzer im Filterbereich an der unteren Stirnseite 44 der Filtertrommel vorbeigeführt werden und es ist möglich, auch die untere Stirnseite der Filtertrommel mit einem Filtermittel 25' zu versehen und mit Hilfe der Austragvorrichtung eine Reinigung desselben zu erreichen, wenn die wirksame Filterfläche der Filtertrommel noch weiter vergrößert werden soll. In diesem Fall ist die Reinigungsöffnung 47 zweckmäßig nicht an der unteren, sondern an der oberen Stirnseite 43 der Filtertrommel angeordnet.

Die Erfindung ist nicht auf das dargestellte und beschriebene Ausführungsbeispiel beschränkt, sondern es ergeben sich viele Änderungen und Ergänzungen, ohne den Rahmen der Erfindung zu verlassen. So ist es beispielsweise denkbar, der Filtertrommel eine Spüleinrichtung zuzuordnen, die dafür sorgt, daß die sich am Filtermittel absetzenden Verunreinigungen auch hydraulisch, also mit Hilfe des Flüssigkeitsdruckes wieder entfernt werden. Hierzu ist denkbar, im Ablauf für das Filtrat 16 einen Flüssigkeitspuffer anzuordnen, aus dem durch Umschalten der Förderrichtung der Förderpumpe 17 Filtrat unter hohem Druck zurück in die Filtertrommel gefördert wird, wodurch sich ein Rückspüleffekt der Trommel ergibt. Das dabei aus dem Trommelinneren in den Flüssigkeitsbehälter zurückströmende Filtrat nimmt dann die an der Trommelaußenseite angelagerten Verunreinigungen mit. Es ist auch möglich, anstelle der Bürstenleisten oder Kratzerleisten an der Reinigungseinrichtung mehrere Sprühdüsen über die Höhe der Filtertrommel verteilt anzuordnen, durch die dann Hochdruckflüssigkeit gegen die Außenseite der Trommel gespült werden kann, was insbesondere dann von Interesse sein kann, wenn der Flüssigkeitsbehälter gelegentlich vollständig entleert wird, beispielsweise wenn er nicht mit einer Austragvorrichtung ausgestattet ist und die sich absetzenden Verunreinigungen gelegentlich manuell entfernt werden müssen.

Es ist auch möglich, die gesamte Reinigungseinrichtung oder deren Reinigungselemente in Axialrichtung 32 der Filtertrommel beweglich anzuordnen, so daß die Reinigungselemente bei ihrem Umlauf um die Trommel nicht nur in Richtung des Umfanges bewegt werden, sondern auch in einer Richtung quer hierzu, wobei durch die Auf- und Abbewegung solche Verunreinigungen leichter entfernt werden können, die teilweise bereits in die Spalte des Spaltsiebes eingetreten sind und sich darin festgesetzt haben. Die Trommel kann wie bei dem beschriebenen Ausführungsbeispiel lediglich von dem Saugrohr 20 in den Flüssigkeitsbehälter eingetaucht gehalten werden, es ist aber insbesondere bei großen und/oder schweren Trommeln häufig vorteilhaft, die Trommel an einer separaten Trommelaufhängung abzustützen. Bei Vorrichtungen ohne Austrageinrichtung unterhalb der Trommel ist es selbstverständlich auch möglich, diese auf geeignete Auflager aufzusetzen, die im Behälterinneren an dessen Boden angeordnet sind. Mit der erfindungsgemäßen Vorrichtung ist es möglich, bei vergleichsweise geringer Grundfläche und geringem Volumen des Flüssigkeitsbehälters eine Vollstrom-Feinfiltration der gesamten anfallenden, zu filtrierenden Flüssigkeit mit hoher Zuverlässigkeit durchzuführen, wobei die Serviceintervalle für einen vollständigen Austausch bzw. eine Grundreinigung der Filtertrommel nach deren Ausbau wegen der zuverlässigen, kontinuierlichen Reinigung mit Hilfe der Reinigungsvorrichtung außergewöhnlich lang sind und wobei die Stillstandszeit der Vorrichtung, die für den Aus- und Wiedereinbau einer Trommel erforderlich ist, wegen der problemlosen Entnahme der Trommel von der Oberseite des Flüssigkeitsbehälters her und entsprechend deren Wiedereinbau außergewöhnlich kurz ist und hierzu auch keine Flüssigkeit aus dem Flüssigkeitsbehälter abgelassen werden muß.

## Patentansprüche

1. Vorrichtung zum Filtrieren von verunreinigten Flüssigkeiten, insbesondere von Kühl- und/oder Schmierflüssigkeiten in der spanabhebenden Werkstückbearbeitung, mit einem Flüssigkeitsbehälter mit einem Zulauf für die verunreinigte und einem Ablauf für die filtrierte Flüssigkeit, in dem ein mit dem Ablauf verbindbarer Filtriereinsatz angeordnet ist, wobei der Filtriereinsatz eine im Flüssigkeitsbehälter gegenüber diesem unbeweglich montierbare, zylindrische Filtertrommel mit einem an deren Umfang angeordneten Filtermittel umfasst, das von einer entlang der Umfangsfläche der Trommel bewegbaren Reinigungseinrichtung reinigbar ist, **dadurch gekennzeichnet, daß** die Reinigungseinrichtung (28) mittels eines Drehlagers (35) drehbar an der Oberseite (23) des Behälters (11) in diesen eintauchend gelagert ist.

2. Vorrichtung nach Anspruch 1, **dadurch gekennzeichnet, daß** die Filtertrommel (19) auf einer Stirnseite stehend oder hängend im Flüssigkeitsbehälter (11) angeordnet und von oben in den Behälter (11) einsetzbar bzw. nach oben aus dem Behälter (11) entfernbar ist.

3. Vorrichtung nach Anspruch 1 oder 2, **dadurch gekennzeichnet, daß** der Filtratablauf (15) über ein Filtrat-Saugrohr (20) erfolgt, das unter Abdichtung durch eine Stirnfläche (43) der Filtertrommel (19) in das Trommelinnere (27) hineinragt.

4. Vorrichtung nach Anspruch 3, **dadurch gekennzeichnet, daß** die Filtertrommel (19) am Filtratablauf (15) hängend angeordnet ist.

5. Vorrichtung nach einem der Ansprüche 1 bis 4, **dadurch gekennzeichnet, daß** die Filtertrommel (19) an ihrer unteren Stirnseite (44) eine Ablaßöffnung (45) aufweist, die von der oberen Stirnseite (43) her zu öffnen bzw. zu verschließen ist.

6. Vorrichtung nach einem der Ansprüche 1 bis 5, **dadurch gekennzeichnet, daß** die Filtertrommel (19) an ihrer oberen und/oder unteren Stirnseite (43; 44) eine verschließbare Reinigungsöffnung (47) aufweist.

7. Vorrichtung nach einem der Ansprüche 1 bis 6, **dadurch gekennzeichnet, daß** das Filtermittel (25) ein Spaltsieb (26) ist.

8. Vorrichtung nach einem der Ansprüche 1 bis 7, **dadurch gekennzeichnet, daß** die Reinigungseinrichtung (28) wenigstens ein sich über die Höhe der Filtertrommel (19) erstreckendes, um den Filtertrommelumfang (24) am Filtermittel (25) entlang bewegbares Reinigungselement (29) aufweist.

9. Vorrichtung nach einem der Ansprüche 1 bis 8, **dadurch gekennzeichnet, daß** das Reinigungselement (29) im wesentlichen aus einer am Filtermittel (25) entlangbewegbaren Kratzer- und/oder Bürstenleiste (38; 39) besteht.

10. Vorrichtung nach einem der Ansprüche 1 bis 9, **dadurch gekennzeichnet, daß** das Reinigungselement (29) austauschbar an der Reinigungseinrichtung (28) angeordnet ist.

11. Vorrichtung nach einem der Ansprüche 1 bis 10, **dadurch gekennzeichnet, daß** das Reinigungselement (29) von der Oberseite des Behälters (23) her von der Reinigungseinrichtung (28) entfernbar bzw. an dieser montierbar ist.

12. Vorrichtung nach einem der Ansprüche 1 bis 11, **dadurch gekennzeichnet, daß** die Reinigungseinrichtung (28) mehrere Reinigungselemente (29) aufweist, die an mindestens einem gemeinsamen, die Filtertrommel (19) umgebenden Haltering (30, 31) angeordnet sind.

13. Vorrichtung nach einem der Ansprüche 1 bis 12, **dadurch gekennzeichnet, daß** die Filtertrommel (19) und die Reinigungseinrichtung (28) an einer gemeinsamen Abdeckung (12) des Flüssigkeitsbehälters (11) angeordnet sind.

14. Vorrichtung nach einem der Ansprüche 1 bis 13, **dadurch gekennzeichnet, daß** die Filtertrommel (19) mit ihrem umfangsseitig angeordneten Filtermittel (25) vollständig in die zu filtrierende Flüssigkeit (14) im Flüssigkeitsbehälter (11) eintaucht.

15. Vorrichtung nach einem der Ansprüche 1 bis 14, **dadurch gekennzeichnet, daß** das Reinigungselement (29) in einer Halteprofilleiste (40) axial verschieblich aufgenommen ist.

16. Vorrichtung nach einem der Ansprüche 1 bis 15, **dadurch gekennzeichnet, daß** das Reinigungselement (29) relativ zur Filtertrommel (19) höhenbeweglich angeordnet ist.

17. Vorrichtung nach einem der Ansprüche 1 bis 16, **gekennzeichnet durch** eine Spüleinrichtung für die Filtertrommel (19) .

18. Vorrichtung nach Anspruch 17, **dadurch gekennzeichnet, daß** die Spüleinrichtung im wesentlichen aus einer Filtrat (16) in das Innere (27) der Filtertrommel (19) fördernden Rückspülpumpe besteht.

19. Vorrichtung nach einem der Ansprüche 1 bis 18, **dadurch gekennzeichnet, daß** wenigstens eines der Reinigungselemente (29) mit einer mittels Druckflüssigkeit beaufschlagbaren Druckreinigereinheit versehen ist.

20. Vorrichtung nach einem der Ansprüche 1 bis 19, **dadurch gekennzeichnet, daß** der Flüssigkeitsbehälter (11) mit einer wenigstens teilweise unterhalb der Filtertrommel (19) angeordneten Austragvorrichtung (51) versehen ist.

21. Vorrichtung nach Anspruch 20, **dadurch gekennzeichnet, daß** die Austragvorrichtung (51) im wesentlichen aus einem Kratzerförderer (56) mit am Behälterboden (59) entlangbewegbaren Förderkratzern (57) besteht.

22. Vorrichtung nach Anspruch 21, **dadurch gekennzeichnet, daß** die Filtertrommel (19) an ihrer unteren Stirnseite (44) mit einem zusätzlichen Filtermittel (25') versehen ist, wobei das Obertrum (60) des Kratzerförderers (56) mit den Förderkratzern (57) an dem zusätzlichen Filtermittel (25') vorbeigeführt ist.

## Claims

1. Apparatus for filtering contaminated liquids, in particular cooling and/or lubricating liquids for the machining of workpieces with metal removal, having a liquid container with an inlet for the contaminated liquid and an outflow for the filtered liquid, in which container a filtering insert is disposed which can be connected to the outflow, whereby the filtering insert comprises a cylindrical filter drum which is mountable in a fixed manner relative thereto with a filter means arranged at its periphery, which can be cleaned by a cleaning device which is moveable along the peripheral area of the drum, **characterised in that** the cleaning device (28) is rotatably mounted on the top end face (23) of the container (11) immersed therein by means of a pivot bearing (35).

2. Apparatus according to claim 1, **characterised in that** the filter drum (19) is arranged standing on a top face or suspended in the liquid container (11) and can be inserted into the container (11) or removed from the container (11) upwardly.

3. Apparatus according to claim 1 or 2, **characterised in that** the filtrate outflow (15) takes place via a filtrate suction pipe (20) which projects into the drum interior (27) by sealing by a top end face (43) of the filter drum (19).

4. Apparatus according to claim 3, **characterised in that** the filter drum (19) is arranged in a suspended manner at the filtrate outflow (15).

5. Apparatus according to one of claims 1 to 4, **characterised in that** the filter drum (19) comprises an outlet opening (45) at its bottom end face (44), which opening can be opened or closed from the top end face (43).

6. Apparatus according to one of claims 1 to 5, **characterised in that** the filter drum (19) comprises a closable cleaning aperture (47) at its top and/or bottom end face (43; 44).

7. Apparatus according to one of claims 1 to 6, **characterised in that** the filter means (25) is a bar screen (26).

8. Apparatus according to one of claims 1 to 7, **characterised in that** the cleaning device (28) comprises at least one cleaning element (26) which extends across the height of the filter drum (19), which is moveable around the periphery (24) of the filter drum along the filter means (25).

9. Apparatus according to one of claims 1 to 8, **characterised in that** the cleaning element (29) substantially consists of a scraper and/or brush strip (38; 39) which is moveable along the filter means (25).

10. Apparatus according to one of claims 1 to 9, **characterised in that** the cleaning element (29) is replaceably mounted on the cleaning device (28).

11. Apparatus according to one of claims 1 to 10, **characterised in that** the cleaning element (29) is removable and mountable on the cleaning device (28) from the top end face of the container (23).

12. Apparatus according to one of claims 1 to 11, **characterised in that** the cleaning device (28) comprises several cleaning elements (29) which are arranged on at least one common retaining ring (30, 31) which surrounds the filter drum (19).

13. Apparatus according to one of claims 1 to 12, **characterised in that** the filter drum (19) and the cleaning device (28) are arranged on a common cover (12) of the liquid container (11).

14. Apparatus according to one of claims 1 to 13, **characterised in that** the filter drum (19) with its peripherally arranged filter means (25) immerses entirely into the liquid (14) to be filtered in the liquid container (11).

15. Apparatus according to one of claims 1 to 14, **characterised in that** the cleaning element (29) is accommodated in a profiled retaining strip (40) in an axially displaceable manner.

16. Apparatus according to one of claims 1 to 15, **characterised in that** the cleaning element (29) is height-adjustable relative to the filter drum (19).

17. Apparatus according to one of claims 1 to 16, **characterised by** a flushing device for the filter drum (19).

18. Apparatus according to claim 17, **characterised in that** the flushing device substantially consists of a back-flushing pump for delivering filtrate (16) into the interior (27) of the filter drum (19).

19. Apparatus according to one of claims 1 to 18, **characterised in that** at least one of the cleaning elements (29) is provided with a pressure cleaning device which can be charged by pressurised fluid.

20. Apparatus according to one of claims 1 to 19, **characterised in that** the liquid container (11) is provided with extractor device (51) arranged at least partially below the filter drum (19).

21. Apparatus according to claim 20, **characterised in that** the extractor device (51) substantially consists of a scraper conveyor (56) with conveying scrapers (57) moveable along the container base (59).

22. Apparatus according to claim 21, **characterised in that** the filter drum (19) is provided with an additional filter means (25') at its bottom end face (44), whereby the upper belt (60) of the scraper conveyor (56) is led past the additional filter means (25') with the conveying scrapers (57).

## Revendications

1. Dispositif pour filtrer des liquides pollués, en particulier des liquides de refroidissement et/ou de lubrification dans l'usinage de pièces par enlèvement de copeaux, comprenant un réservoir de liquide équipé d'une arrivée pour le liquide pollué et d'un départ pour le liquide filtré, réservoir dans lequel est disposée une cartouche filtrante pouvant être reliée avec le départ, la cartouche filtrante comprenant un tambour de filtration cylindrique pouvant être monté dans le réservoir de liquide, de manière immobile par rapport à celui-ci, le tambour étant équipé d'un moyen de filtration agencé sur son pourtour et pouvant être nettoyé par un dispositif de nettoyage mobile le long de la surface périphérique du tambour, **caractérisé en ce que** le dispositif de nettoyage (28) est monté de façon rotative sur une face supérieure (23) du réservoir (11) au moyen d'un palier de rotation (35) et plonge dans le réservoir.

2. Dispositif selon la revendication 1, **caractérisé en ce que** le tambour de filtration (19) est disposé dans le réservoir de liquide (11), suspendu ou dressé sur une face d'extrémité, et peut être installé d'en haut dans le réservoir (11) et de façon correspondante extrait du réservoir (11) vert le haut.

3. Dispositif selon la revendication 1 ou 2, **caractérisé en ce que** le départ de filtrat (15) s'effectue par un tube d'aspiration de filtrat (20), qui pénètre dans l'intérieur (27) du tambour à travers une face d'extrémité (43) du tambour de filtration (19).

4. Dispositif selon la revendication 3, **caractérisé en ce que** le tambour de filtration (19) est disposé suspendu au départ (15) de filtrat.

5. Dispositif selon l'une des revendications 1 à 4, **caractérisé en ce que** le tambour de filtration (19) présente sur sa face d'extrémité inférieure (44) une ouverture de sortie (45) qui s'ouvre et se ferme à partir de la face d'extrémité supérieure (43).

6. Dispositif selon l'une des revendications 1 à 5, **caractérisé en ce que** le tambour de filtration (19) présente sur sa face d'extrémité supérieure et/ou inférieure (43 ; 44) une ouverture de nettoyage (47) obturable.

7. Dispositif selon l'une des revendications 1 à 6, **caractérisé en ce que** le moyen de filtration (25) est un tamis à fentes (26).

8. Dispositif selon l'une des revendications 1 à 7, **caractérisé en ce que** le dispositif de nettoyage (28) présente au moins un élément de nettoyage (29) s'étendant sur la hauteur du tambour de filtration (19), déplaçable le long du moyen de filtration (25) autour de la périphérie (24) du tambour de filtration.

9. Dispositif selon l'une des revendications 1 à 8, **caractérisé en ce que** l'élément de nettoyage (29) est essentiellement constitué d'une barrette de brossage et/ou de raclage (38 ; 39) déplaçable le long du moyen de filtration (25).

10. Dispositif selon l'une des revendications 1 à 9, **caractérisé en ce que** l'élément de nettoyage (29) est monté interchangeable sur le dispositif de nettoyage (28).

11. Dispositif selon l'une des revendications 1 à 10, **caractérisé en ce que** l'élément de nettoyage (29) peut être démonté du dispositif de nettoyage et remonté sur celui-ci depuis la face supérieure du réservoir (23).

12. Dispositif selon l'une des revendications 1 à 11, **caractérisé en ce que** le dispositif de nettoyage (28) présente plusieurs éléments de nettoyage (29), qui sont montés sur au moins un anneau de maintien commun (30, 31) entourant le tambour de filtration (19).

13. Dispositif selon l'une des revendications 1 à 12, **caractérisé en ce que** le tambour de filtration (19) et le dispositif de nettoyage (28) sont montés sur un couvercle commun (12) du réservoir de liquide (11).

14. Dispositif selon l'une des revendications 1 à 13, **caractérisé en ce que** le tambour de filtration (19) plonge complètement dans le fluide à filtrer (14), contenu dans le réservoir de fluide (11), son moyen de filtration (25) disposé en périphérie.

15. Dispositif selon l'une des revendications 1 à 14, **caractérisé en ce que** l'élément de nettoyage (29) est reçu axialement déplaçable dans une barrette de maintien profilée (40) .

16. Dispositif selon l'une des revendications 1 à 15, **caractérisé en ce que** l'élément de nettoyage (29) est monté mobile en hauteur par rapport au tambour de filtration (19).

17. Dispositif selon l'une des revendications 1 à 16, **caractérisé par** un dispositif de lavage pour le tambour de filtration (19).

18. Dispositif selon la revendication 17, **caractérisé en ce que** le dispositif de lavage est essentiellement constitué d'une pompe de rétrolavage pompant du filtrat (16) vers l'intérieur (27) du tambour de filtration (19).

19. Dispositif selon l'une des revendications 1 à 18, **caractérisé en ce qu'**au moins un des éléments de nettoyage (29) est muni d'une unité de nettoyage sous pression pouvant être alimentée de fluide sous pression.

20. Dispositif selon l'une des revendications 1 à 19, **caractérisé en ce que** le réservoir de fluide (11) est muni d'un dispositif d'extraction (51) monté au moins partiellement en-dessous du tambour de filtration (19).

21. Dispositif selon la revendication 20, **caractérisé en ce que** le dispositif d'extraction (51) consiste essentiellement en un transporteur racleur (56) comportant des raclettes de transport (57) déplaçables le long du fond du réservoir (59) .

22. Dispositif selon la revendication 21, **caractérisé en ce que** le tambour de filtration (19) est muni de moyens de filtration additionnels (25') sur sa face d'extrémité inférieure (44), le brin supérieur (60) du transporteur racleur (56) étant guidé de façon que les raclettes de transport (57) passent le long du moyen de filtration additionnel (25').
